# EUROPEAN PATENT SPECIFICATION

(11) **EP 1 748 599 B1**
(45) Date of publication and mention of the grant of the patent: **24.02.2010**
(21) Application number: 05732901.3
(22) Date of filing: 31.03.2005
(51) Int. Cl.: H04L 12/28, H04L 12/56, H04L 12/42, H04L 12/46

(54) **A ring carrying network and the method for implementing the service carry**
Ringträgernetzwerk und Verfahren zur Implementierung des Dienstträgers
Réseau porteur d'anneaux et procédé de mise en oeuvre de porteur de services

(30) Priority: 12.05.2004 CN 200410034777
(43) Date of publication of application: 31.01.2007
(73) Proprietor: Huawei Technologies Co., Ltd., Longgang District, Shenzhen, Guangdong Province 518129 (CN)
(72) Inventor: WAN, Huaixue, Huawei Administration Building, Shenzhen, Guangdong 518129 (CN)
(74) Representative: Körber, Martin Hans
(86) International application number: PCT/CN2005/000421
(87) International publication number: WO 2005/109756

(56) References cited:
- EP-A- 1 388 979
- WO-A1-03/050553
- CN-A- 1 472 938
- US-A- 2003 208 525
- DAVID WRIGHT: "Voice over MPLS Compared to Voice over Other Packet Transport Technologies" IEEE COMMUNICATIONS MAGAZINE, IEEE SERVICE CENTER, PISCATAWAY, US, vol. 40, no. 11, November 2002 (2002-11), pages 124-132, XP011092957 ISSN: 0163-6804

## Description

### Field of the Invention

The present invention relates to the technical field of service carrying in network communication, particularly to a ring network and a method of implementing service carrying thereof.

### Background of the Invention

As communication service carrying network technologies develop, new generations of metropolitan area carrying network technologies emerge continuously, and the Resilient Packet Ring (RPR) technology, characterized by technical sophistication, effectiveness of investment, superior performance, and extensive supports for services, provides a good solution for metropolitan area carrying networks.

The RPR network is a new carrying network architecture generated on the basis of requirements of packet metropolitan area network. Particularly, it is a ring network composed of packet switching nodes, with adjacent nodes connected through a pair of reverse physical paths, and its network topology is based on two reverse transmission rings, where the ring that transmits data clockwise is called an outer ring, and the ring that transmits data counterclockwise is called an inner ring.

The RPR technology is a Media Access Control (MAC) layer protocol, which optimizes the data service transport on the ring topology, and is adaptive to diverse media on the physical layer, and can effectively transport different types of data, e.g., voice, image and so on. It incorporates economical efficiency, flexibility, and scalability of the Ethernet technology and also the advantage of a 50ms fast protection of the Synchronous Digital Hierarchy (SDH) ring network, and is provided with the functions including automatic network topology detection, ring bandwidth sharing, fair bandwidth allocation, and strict Class of Service (CoS), etc.

However, the RPR technology has its limitations: IEEE802.17 only defines the RPR MAC (Media Access Control) layer technology designed for a single physical ring or logical ring (a Virtual Container (VC) channel across multiple SDH physical rings), but the RPR uses a dedicated frame format, which can not be identified by any other device outside of the RPR network. Therefore, it fails to offer a solution for the entire network, and is only applicable to single ring networking. In cross-ring scenarios, it has to be terminated with R-MAC (Resilient Packet Ring-Media Access Control) and can not provide the functions of end-to-end bandwidth sharing, fairness mechanism or Quality of Service (QoS) assurance and protection for the inter-ring services. As a result, a Multi-Service Provisioning Platform (MSPP) purely with the RPR embedded has certain limitations of topology upon establishment of a complex network and has to be supplemented with other technologies so as to provide the end-to-end service provision.

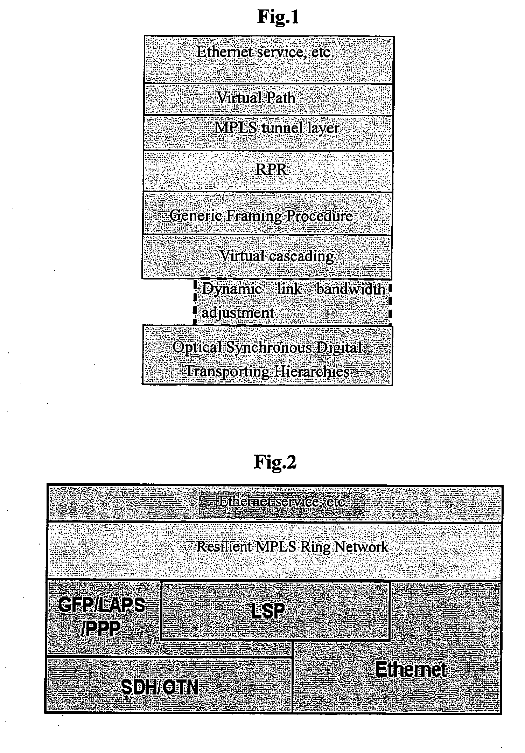

At present, a general solution is to introduce layer-2/layer-3 switches at entries/exits of rings and between rings to implement inter-RPR service interconnections, which increases the network complexity and makes the network structure unclear. Another solution is to remedy the disadvantages of RPR through MPLS over RPR. However, this approach introduces a two-layer protocol: the RPR layer and the Multi Protocol Label Switching (MPLS) layer, as shown in Fig. 1, which increases the complexities of service processing and network Operation Administration and Maintenance (OAM), and degrades the processing efficiency. In addition, due to the special frame format of the RPR, the introduction of MPLS layer will increase the overhead for each data packet, and thereby degrade the utilization ratio of network bandwidth.
The article of D. Wright entitled "Voice over MPLS compared to voice over other packet transport technologies" in IEEE Com. Mag., vol. 40, no. 11, November 2002, pp. 124-132 discloses that most major carriers are deploying MPLS and are also migrating voice traffic to packet transport, analyzes how those trends can be combined, and compares the advantages of VoMPLS with VoATM, VoIP, and VoFR, from the viewpoints of bandwidth utilization, implementation issues, and the region of the network (access/ backbone) in which implementation takes place. VoMPLSoPPP is more efficient than VoMPLSoATM or VoMPLSoEthernet. In the network backbone VoMPLSoPPP is most efficient. VoAAAL2oATM has intermediate efficiency, and VoIP is highly inefficient. In the access network use of header compression improves the efficiency of VoIP but does not bring it to the level of VoAAL2oATM, which is approximately as efficient as VoMPLSoEthernet. VoMPLSoPPP remains most efficient.
US 2003/0108029 A1 discloses that a working label switched path (LSP) between neighbor label switched routers (LSRs) in a ring network that utilizes label switching is protected by an LSP that connects the neighbor LSRs of the working LSP in an opposite direction to the working LSP. If the working LSP fails, packets are switched to the protection LSP. Switched packets traverse the protection LSP until they reach the neighbor LSR that they would have reached had the packets traversed the working LSP. Time-to-live (TTL) values of packets that traverse the protection LSP are adjusted to account for the number of hops on the protection LSP so that the TTL values of the packets are the same after traversing the protection LSP as they would have been had they traversed the working LSP. After traversing the protection LSP packets can be switched back to the working LSP or switched to a next hop LSP.
EP 1 388 979 A describes a method and apparatus for an end-to-end connection between an RPR and an MPLS network, where the RPR network is linked to the MPLS network (and vice versa) through a TLS layer. In a preferred solution therein, the client layer is Ethernet, but any client layer can be considered.

### Summary of the Invention

In view of the above, the present invention provides a ring network and a method for implementing service carrying, for the ring network as defined in claim 1 and claim 3 respectively. Preferred embodiments are defined by the dependent claims.

It can be seen from the above technical solutions of the present invention that the ring network according to the embodiments of the present invention not only has almost all functions of the RPR network, but also provides the following advantages over RPR network: it has one network layer less than the RPR (the MAC layer), and therefore it is simpler in processing and improves processing efficiency of data transmission and utilization ratio of bandwidth of the ring network; due to the use of the standard MPLS frame format, the client data format is independent of the ring network, and therefore the cross-ring end-to-end service provision as well as the service interconnection in the case of multi ring intersecting/inter tangency can be implemented in the ring network according to the embodiments of the present invention without any auxiliary technology; due to the use of the MPLS encapsulation technology for the ring network, different QoS parameters can be defined for different Label Switched Paths (LSPs), and therefore more Service Level Agreements (SLAs) can be supported, differentiated QoS can be guaranteed and supported better through scheduling LSP granularities according to pre-negotiated QoS parameters; and furthermore, the Operation And Maintenance (OAM) functions in MPLS can be utilized sufficiently, for example including LSP Connectivity Verification (CV), LSP Fast Failure Detect (FFD), Forward Defect Indication (FDI), Backward Defect Indication (BDI), etc.

### Brief Descriptions of the Drawings

Fig.1 is a schematic diagram of the hierarchy at which a Resilient Packet Ring (RPR) is located in a Multi-Service Provisioning Platform (MSPP);

Fig.2 is a schematic diagram of the hierarchy at which a ring network is located in a MSPP according to an embodiment of the present invention;

Fig.3 shows the topology of the ring network according to the embodiment of the present invention;

Fig.4 is a flowchart of a method of implementing service carrying on the basis of the ring network as shown in Fig.3 according to an embodiment of the present invention;

Fig.5 is a schematic diagram of an implementation for ring network services scheduled onto/off the network according to an embodiment of the present invention;

Fig.6 is a schematic diagram of an implementation for scheduling cross-ring service onto/off according to an embodiment of the present invention; and

Fig.7 is a schematic diagram of an implementation for protecting a cross-ring service according to an embodiment of the present invention.

### Detailed Descriptions of the Embodiments

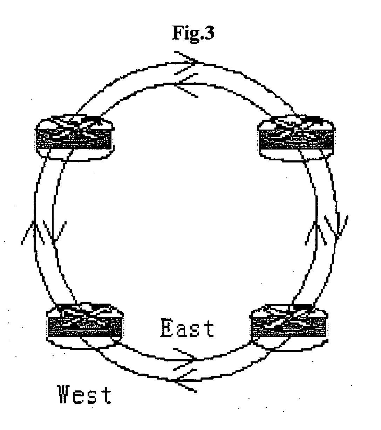

The essence of embodiments of the present invention lies in that a ring network (a resilient MPLS ring network) can be established directly at the Multi Protocol Label Switching (MPLS) layer, independent of the Resilient Packet Ring (RPR) layer. Here, the hierarchy at which the ring network is located in the MSPP is as shown in Fig.2, which is independent of the physical layer. It may employ different physical layer technologies as required or be borne directly over a logical link. The network topology of the ring network is as shown in Fig.3, including a plurality of network nodes with the use of a double-ring structure composed of a west ring and an east ring. Particularly, the west ring transports services clockwise, and the east ring transports services counterclockwise. Different nodes are connected with each other through physical links for carrying user services from the different nodes in a label-switched-path manner. The nodes receive or transmit data encapsulated in a standard Multi-Protocol Label Switching (MPLS) frame format, and adapt the transmission data into the physical links directly through the Generic Framing Protocol (GFP), Point-to-Point Protocol (PPP) or High speed Data Link Control (HDLC), or carry the same directly onto logical links. It is unnecessary for the ring network to redefine a frame format. Instead, the ring network directly uses the standard MPLS frame format to transmit the user services, and the services from different nodes are multiplexed in the manner of Label Switched Path (LSP) into a physical link (e.g., Synchronous Digital Hierarchy (SDH)/Optical Transporting Network (OTN)) or a logical link (e.g., LSP).

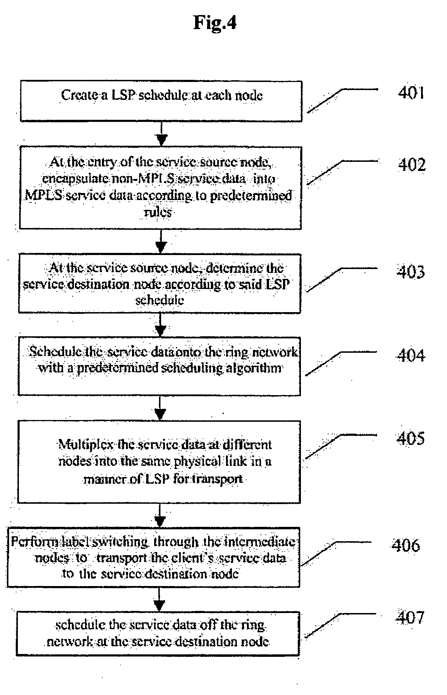

To enable those skilled in the art to understand the solution of the present invention better, hereinafter the user client data transport flow through the ring network will be detailed with reference to the flowchart in Fig.4, including the following steps:

Step 401: creating a label switched path schedule at each of the network nodes. The label switched path schedule contains information on a label action, a destination port, etc., and the label action includes popping up a label, pushing a label, and switching a label. The schedule may be created through a static configuration, or may be created and maintained through Label Distributing Protocol (LDP)/Resource Reservation Protocol (RSVP) or a combination of the both.

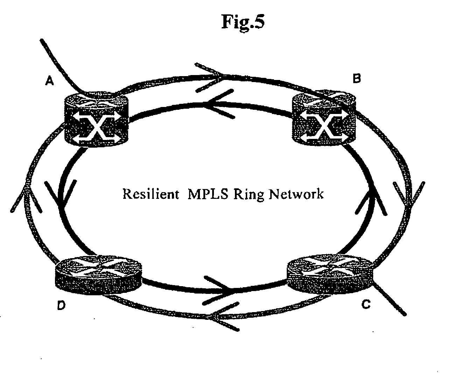

Step 402: at the entry of the service source node, encapsulating non-multi protocol label switching client data into multi protocol label switching client data according to predetermined rules. The detailed process is shown in Fig. 5, in which the ring network includes four nodes: A, B, C, and D. At the entry of the source node A, classifying client data packets in a non-multi protocol label switching format into different Forwarding Equivalent Classes (FECs) according to predetermined rules; inserting respective labels into packet headers according to the forwarding equivalent classes of the packets; and thereby accomplishing the multi protocol label switching encapsulation. The predetermined rules are specified by users, e.g., performing operations on the non-MPLS client data packets according to a destination address or Quality of Service (QoS) requirement, etc. If the client data itself of the user is MPLS client data, this step may be omitted;

Step 403: at the service source node, obtaining the service destination node according to the label switched path schedule. The detailed process is: after performing the label actions (poping up a label, pushing a label, swapping a label) according to the label switched path schedule, finding out the egress port and obtaining the service destination node;

Step 404: scheduling the client data onto the ring network according to a predetermined scheduling algorithm.

For instance, it is possible to schedule the user client data onto the ring network according to the strict priority scheduling algorithm, so as to provide a service of a better level for the user.

First, this step performs flow classification for the local client data to be scheduled onto the ring and fills the experiment (EXP) field of the MPLS frame according to the level of the flow classification, for example, the priority field of Virtual Local Area Network (VLAN) client data and/or the service type field of Internet Protocol (IP) client data and/or the priority level specified by the administrator;

Then, this step schedules the local client data through different egress port queues onto the ring network according to different priority levels indicated by the experiment field.

Of course, any other scheduling algorithm, e.g., the Weighted Round Robin (WRR) scheduling algorithm, may also be used as required.

Step 405: multiplexing the client data of different nodes into the same physical link or logical link in a manner of label switched path for transport.

First, this step establishes an LSP required for the MPLS service, and then adapts the MPLS client data to the physical link corresponding to the LSP directly through Generic Framing Procedure (GFP), Point-to-Point Protocol (PPP) or High speed Data Link Control (HDLC) protocol, etc., or carries the MPLS client data directly into the logical link.

Step 406: performing the label switching through the intermediate node to transport the user client data to the service destination node. For instance, in Fig.5, after the label switching through the intermediate node B, the client data is forwarded to the next node C quickly.

Step 407: scheduling the client data off the ring network at the service destination node; referring to Fig.5, at the destination node C, after searching in the label switched path schedule, this step determines the node as the destination node of the label switched path, schedules the user client data off the ring network, and performs respective processing on the user layer signals.

The ring-type network according to an embodiment of the present invention transports the client data of the client in a standard MPLS frame format, and makes the client data format independent of the ring carrying network. Therefore, devices outside of the ring network can identify user frames of the ring network without any processing. As a result, the cross-ring end-to-end service provision as well as the client data interconnection for the multi-ring intersectinglinter-tangency can be achieved conveniently.

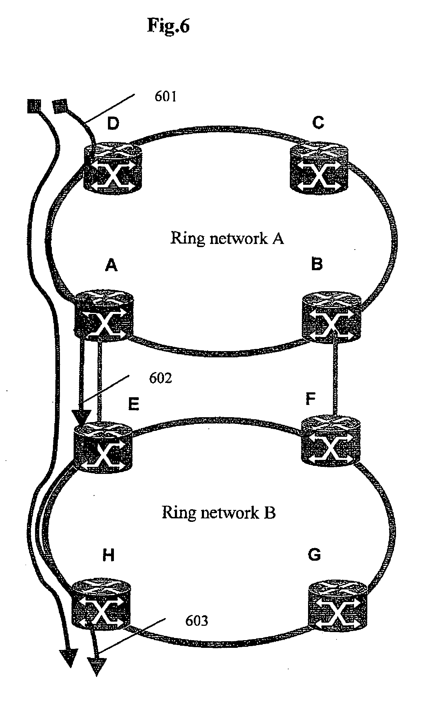

Fig.6 is an implementation diagram of scheduling cross-ring client data onto/off the ring network according to an embodiment of the present invention:

Client data is shown across ring networks A and B according to the embodiment of the present invention, wherein the ring network A includes four nodes: node A, B, C and D, and the ring network B includes four nodes: node E, F, G and H. 601 is an actual path of the client data in the ring network A, 602 is an actual inter-ring path of the client data, and 603 is an actual path of the client data in the ring network B. For the implementation, the paths 601, 602 and 603 correspond respectively to one LSP, i.e., one LSP from node D to node A in the ring network A: LSP1; one LSP from node E to node H in the ring network B: LSP3; and another LSP from node A to node E between the ring networks A and B: LSP2; and the label switching from LSP1 to LSP2 and from LSP2 to LSP3 is implemented respectively at node A and node E.

It can be seen that the cross-ring client data can be scheduled through the LSP scheduling of the MPLS, both on and between the ring networks, without other conversions.

In the case of multi-ring intersectinglinter-tangency, the transporting process for the cross-ring client data is similar to the above, and will not be repeated here.

To better ensure normal network operations, the embodiment of the present invention also takes the following protection measures for the ring network:

1. LSP-based protection (Label Switched Path protection)

(1) Protection of within-ring client data: implementing the 1:1 or 1+1 LSP protection with the MPLS Operation Administration and Maintenance (OAM) function.

In detail, it is as follows: the working LSP and the standby LSP are configured reversely to each other (e.g., the working LSP is configured in the west ring; and the standby LSP is configured in the east ring); and in the case that the working LSP fails, the failure is detected in time with the MPLS OAM function, and then the standby LSP is enabled.

(2) Protection of cross-ring client data: implementing 1:1 or 1+1 LSP protection with the MPLS OAM function.

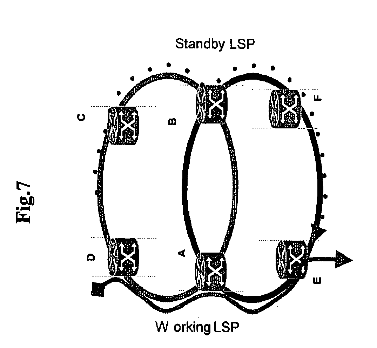

As shown in Fig.7, the working LSP and the standby LSP are across the different links of intersecting rings; and in the case that the working LSP fails, the failure is detected in time with the MPLS OAM function, and the standby LSP is enabled.

The MPLS OAM function mentioned above is described briefly as follows:

The MPLS OAM frame formats are defined in ITU-T Rec.Y.1711, and there are currently six types of defined frames: Connectivity Verification (CV), Fast Failure Detect (FFD), Forward Defect Indication (FDI), Backward Defect Indication (BDI), Performance Message, Loop Back Request and Loop Back Response. However, only CV, FDI, and BDI are defined with explicit formats and operating procedures.

(a) Connectivity Verification: a CV flow is generated at the source Label Switching Router (LSR) of LSP, transmitted at a speed of 1/S, and terminated at the destination LSR of LSP; and the CV message carries a unique network identifier of Trail Termination Source Indication (TTSI), thus establishing the basis of detecting all defects.

(b) Forward Defect Indication: an FDI message is generated in response to a failure detection behavior (e.g., a defect from the CV flow), and is mainly intended to suppress an alarm from a network layer above the layer where an error is detected;

(c) Backward Defect Indication: a BDI flow is inserted in the return path (e.g., a return LSP), and is intended to notify the uplink LSR (a source node of the forward LSP) of the defect detected at the destination node of the downlink LSP (a label switched router) to.

2. Network-based protection

(1) Ring switching protection (wrap):

In detail, it is as follows:

1. the network nodes exchange topology information with each other through automatic topology detection signaling, so that each node can know the network state;

2. in the case that the ring network fiber is broken, the nodes at both ends of the broken point can detect the defect information and the location of the fault;

3. the nodes at both ends of the broken point can send control signaling along the direction of the fiber to notify the respective nodes;

4. the client data is looped back at the nodes adjacent to the defect point, respectively;

5. during the ring protection switching, the client data is switched to the reverse LSP channel in sequence according to different service levels of the client data. In this way, even if the protection for the lower layer of the network is unavailable, the effect of the ring switching protection approximating to the SDH/SONET layer can be affected.

(2) Source route protection (steering)

In detail, it is as follows:

1. Topology information is exchanged between the network nodes through signaling, so that each node can know the network state;

2. In the case that the ring network fiber is broken, the nodes at both ends of the broken point can send control signaling to notify to other nodes of the information on the affected LSP;

3. When the respective LSP source node receives the information, it will redirect the LSP to the other direction of the ring immediately, so as to implement the source route protection.

To provide better Quality of Service for the user service, the embodiment of the present invention utilizes the experiment (EXP) field in the MPLS label (the use of this field is not defined in the standard, and this field includes 3 bits, and is usually used for priorities, supporting 8 priorities). Different QoS parameters can be defined for different LSPs, so that more Service Level Agreements (SLAs) can be supported. Differentiated QoSs can be further guaranteed and supported through scheduling LSP granularities according to pre-negotiated QoS parameters. In detail, the process is as follows:

1. At the source node, the flow classification is performed on the local client data to be scheduled onto the ring;

2. The EXP field of the MPLS frame is filled according to the flow classification level:

a). The MPLS encapsulation is performed on the non-MPLS flow. The value of the EXP field in the MPLS format is determined according to a certain algorithm, for instance, the flow classification is performed on the client data according to the information such as the pri (priority) field of Virtual Local Area Network (VLAN) client data (this field includes 3 bits, indicative of 8 priorities) and/or a field of Type Of Service (TOS) of Internet Protocol (IP) client data (this field identifies the type of the IP service, e.g., video service and the like) and/or the priority designated by the administrator. One or more of them can be selected as required for a combination. For instance, if the TOS field is indicative of video service and the priority of VLAN is high, it can be defined as the first priority; if the priority of VLAN is relatively low, it can be defined as the second priority; and so on;

b) For a MPLS flow, it is possible to choose as required to use the already existing EXP field or reassign an EXP field;

c) The EXP field filling is only for the local service scheduled onto the ring and uses the same algorithm for all the nodes on the ring;

3. According to the different priorities indicated by the EXP field, the user service data can be scheduled to different egress port queues;

4. The different priority queues are scheduled to the egress ports according to a certain algorithm and policy (e.g., a scheduling algorithm, such as a strict priority scheduling algorithm, etc.), i.e., they are scheduled onto the ring network for transmission.

Since the bandwidth of the ring network is a shared resource, the network congestion may occur easily in the case that the bandwidth is over-occupied by an individual node or an individual user. Therefore, in the ring network according to the embodiment of the present invention, service bandwidth information can be collected from the respective nodes through signaling, and the client data to be scheduled onto the ring are controlled at the respective sites with a certain equity algorithm for controlling fair bandwidth, so that each site can access the ring bandwidth fairly. In detail, the process is as follows:

1. A dedicated LSP is established between two adjacent nodes on the ring to transport the protocol information of the equity algorithm;

2. The Resilient MPLS Ring (RMR) layer of each node keeps observing the utilization of the link immediately adjacent thereto and then notifies all the nodes on the ring of the information;

3. The ring network adopts an internal mechanism, which is dependent upon the equity algorithm used, to execute the equity algorithm, to control utilization of bandwidth. The equity algorithm is a mechanism that enables every user on the ring to share the bandwidth fairly. Unlike the SDH/SONET transport network, which allocates a fixed bandwidth to each user, it instead takes the whole bandwidth of the ring as a global resource for allocation to the users. According to the result of the equity algorithm, each node can know the data amount that is allow for transmission onto the ring ;

4. A feedback mechanism can be established, which adjusts the rate at which the source node transmits data to the network according to the result of the previous step, and thereby implements a fair access to the ring bandwidth.

It can be seen that the ring network according to the embodiments of the present invention not only inherits all advantages of the RPR network, but also has additional advantages over the RPR network, for instance, simpler and more efficient client data processing, provision of cross-ring end-to-end services, service data interconnection in the case of multi-ring intersecting/inter-tangency, more supported Service Level Agreements (SLAs), full utilization of MPLS OAM functions, etc.

Although the present invention has been described with reference to the embodiments, it shall be appreciated by those skilled in the art that there may be various variations and changes possibly made to the embodiments. All such variations and changes should be covered by the present invention, provided that they fall within the scope of the present invention as defined by the appended claims.

## Claims

1. A resilient multi protocol label switching ring network, comprising a plurality of network nodes for sending or receiving client data to or from the resilient multi protocol label switching ring network, and a physical link or a logical link connecting the network nodes for transmitting client data between the network nodes, wherein:
an encapsulation format of the client data received or sent by the network nodes on the resilient multi protocol label switching ring network side is a standard frame format of multi protocol label switching;
the physical link or the logical link carries the client data between the network nodes through a label switched path;
the nodes send data to the resilient multi protocol label switching ring network at rates which are controlled through a bandwidth equity control algorithm; protocol information of the bandwidth equity control algorithm is transported through a dedicated label switched path between two adjacent nodes in the resilient multi protocol label switching ring network,
a media access control layer of each node in the resilient multi protocol label switching ring network observes the utilization of the physical link connected to the node, and notifies all other nodes in the resilient multi protocol label switching ring network of the observed utilization; and
each node in the resilient multi protocol label switching ring network adjusts the rate at which the node sends data to the resilient multi protocol label switching ring network according to the protocol of the equity control algorithm and the obtained notification.

2. The resilient multi protocol label switching ring network according to claim 1, wherein the nodes adapt the client data, to be sent, into the physical link through a generic framing procedure, a point-to-point protocol or a high speed data link control, or directly carry the client data into the logical link.

3. A method of implementing service carrying for the resilient multi protocol label switching ring network of claim 1, comprising:
scheduling multi protocol label switching client data of a service source node onto the resilient multi protocol label switching ring network according to a predetermined scheduling algorithm at the node;
multiplexing, through a label switched path, the client data of different nodes in the same physical link or logical link for transport;
establishing a dedicated label switched path between two adjacent nodes in the resilient multi protocol label switching ring network for transporting protocol information of a bandwidth equity control algorithm;
controlling the rates at which the network nodes send data to the resilient multi protocol label switching ring network through the bandwidth equity control algorithm by
- using the dedicated label switched path between two adjacent nodes in the resilient multi protocol label switching ring network for transporting the protocol information of the equity control algorithm;
- a media access control layer of each node in the resilient multi protocol label switching ring network observing the utilization of the physical link connected to the node, and notifying all other nodes in the resilient multi protocol label switching ring network of the observed utilization; and
- each node in the resilient multi protocol label switching ring network adjusting the rate at which the node sends data to the resilient multi protocol label switching ring network according to the protocol of the equity control algorithm and the obtained notification; and
scheduling the corresponding client data in the physical link or logical link off the resilient multi protocol label switching ring network at a service destination node.

4. The method according to claim 3, wherein the step of scheduling multi protocol label switching client data of a service source node comprises:
scheduling multi protocol label switching client data of a service source node onto the resilient multi protocol label switching ring network according to a strict priority scheduling algorithm at the node.

5. The method according to claim 4, wherein the step of scheduling multi protocol label switching client data of a service source node onto the resilient multi protocol label switching ring network according to a strict priority scheduling algorithm at the node comprises:
performing, at the service source node, flow classification on local client data to be scheduled onto the ring;
filling an experiment field of a multi protocol label switching frame according to a level of the flow classification; and
scheduling the local client data, through different egress port queues, onto the resilient multi protocol label switching ring network according to different priorities indicated by the experiment field.

6. The method according to claim 5, wherein the step of filling an experiment field of a multi protocol label switching frame comprises:
filling an experiment field of a multi protocol label switching frame according to at least one of a priority field of virtual local area network client data, a field of service type of internet protocol client data and a priority designated by an administrator.

7. The method according to claim 3, wherein the step of multiplexing the client data of different nodes comprises:
establishing a label switched path required for the multi protocol label switching client data;
adapting the multi protocol label switching client data into the physical link corresponding to the label switched path through a generic framing procedure, a point-to-point protocol, or a high speed data link control, or adapting the multi protocol label switching client data directly into the logical link corresponding to the label switched path.

8. The method according to claim 3, further comprising:
encapsulating non-multi protocol label switching client data into multi protocol label switching client data according to predetermined rules at the service source node.

9. The method according to claim 3, wherein the predetermined rules comprise:
classifying non-multi protocol label switching client data packets into different forwarding equivalent classes according to destination addresses, inserting corresponding labels into packet headers according to the forwarding equivalent classes of the packets, and thereby accomplishing the multi protocol label switching encapsulation; or
classifying non-multi protocol label switching client data packets into different forwarding equivalent classes according to requirements on quality of service, inserting corresponding labels into packet headers according to the forwarding equivalent classes of the packets, and thereby accomplishing the multi protocol label switching encapsulation.

10. The method according to any one of claim 3 to9, further comprising:
implementing cross-ring client data transmission through a cross-ring label switched path.

11. The method according to any one of claim 3 to 9, further comprising: employing a label switched path 1:1 and/or 1+1 protection for within-ring and cross-ring client data.

12. The method according to any one of claim 3 to 9, further comprising:
employing a ring switching protection and/or a source route protection for the resilient multi protocol label switching ring network.

13. The method according to any one of claim 3 to 9, further comprising:
establishing a dedicated label switched path between two adjacent nodes in the resilient multi protocol label switching ring network for transporting information of an automatic topology discovery protocol.

## Patentansprüche

1. Nachgiebiges Mehrprotokoll-Label-Switchihg-Ringnetzwerk mit mehreren Netzwerkknoten zum Senden oder Empfangen von Client-Daten zu oder von dem nachgiebigen Mehrprotokoll-Label-Switching-Ringnetzwerk und einer physischen Verbindung oder einer logischen Verbindung, die die Netzwerkknoten zum Übertragen von Client-Daten zwischen den Netzwerkknoten verbindet, wobei
ein Einkapselungsformat der durch die Netzwerkknoten auf der Seite des nachgiebigen Mehrprotokoll-Label-Switching-Ringnetzwerks empfangenen oder gesendeten Client-Daten ein Standard-Rahmenformat des Mehrprotokoll-Label-Switching ist;
die physische Verbindung oder die logische Verbindung die Client-Daten zwischen den Netzwerkknoten durch einen Label Switched Path führt;
die Knoten Daten zu dem nachgiebigen Mehrprotokoll-Label-Switching-Ringnetzwerk mit Raten senden, die durch einen Bandbreitenkapital-Steueralgorithmus gesteuert werden; Protokollinformationen des Bandbreitenkapital-Steueralgorithmus durch einen dedizierten Label Switched Path zwischen zwei angrenzenden Knoten in dem nachgiebigen Mehrprotokoll-Label-Switching-Ringnetzwerk transportiert werden,
eine Medienzugangskontrollschicht jedes Knotens in dem nachgiebigen Mehrprotokoll-Label-Switching-Ringnetzwerk die Auslastung der mit dem Knoten verbundenen physischen Verbindung beobachtet und alle anderen Knoten in dem nachgiebigen Mehrprotokoll-Label-Switching-Ringnetzwerk über die beobachtete Auslastung benachrichtigt; und
jeder Knoten in dem nachgiebigen Mehrprotokoll-Label-Switching-Ringnetzwerk die Rate, mit der der Knoten Daten zu dem nachgiebigen Mehrprotokoll-Label-Switching-Ringnetzwerk sendet, gemäß dem Protokoll des Kapitalsteueralgorithmus und der erhaltenen Benachrichtigung justiert.

2. Nachgiebiges Mehrprotokoll-Label-Switching-Ringnetzwerk nach Anspruch 1, wobei die Knoten die Client-Daten anpassen, um durch eine generische Framing-Prozedur, ein Punkt-zu-Punkt-Protokoll oder eine Hochgeschwindigkeits-Datenverbindungssteuerung in die physische Verbindung gesendet zu werden, oder die Client-Daten direkt in die logische Verbindung führen.

3. Verfahren zum Implementieren eines Dienstträgers für das nachgiebige Mehrprotokoll-Label-Switching-Ringnetzwerk nach Anspruch 1, mit den folgenden Schritten:
Einteilen von Mehrprotokoll-Label-Switching-Client-Daten eines Dienstquellenknotens auf das nachgiebige Mehrprotokoll-Label-Switching-Ringnetzwerk gemäß einem vorbestimmten Einteilungsalgorithmus in dem Knoten;
Multiplexen der Client-Daten verschiedener Knoten in derselben physischen Verbindung oder einer logischen Verbindung für Transport durch einen Label Switched Path;
Herstellen eines dedizierten Label Switched Path zwischen zwei angrenzenden Knoten in dem nachgiebigen Mehrprotokoll-Label-Switching-Ringnetzwerk zum Transport von Protokollinformationen eines Bandbreitenkapital-Steueralgorithmus;
Steuern der Raten, mit der die Netzwerkknoten Daten zu dem nachgiebigen Mehrprotokoll-Label-Switching-Ringnetzwerk senden, durch den Bandbreitenkapital-Steueralgorithmus durch die folgenden Schritte:
- Verwenden des dedizierten Label Switched Path zwischen zwei angrenzenden Knoten in dem nachgiebigen Mehrprotokoll-Label-Switching-Ringnetzwerk zum Transport der Protokollinformationen des Kapitalsteueralgorithmus;
- eine Medienzugangskontrollschicht jedes Knotens in dem nachgiebigen Mehrprotokoll-Label-Switching-Ringnetzwerk beobachtet die Auslastung der mit dem Knoten verbundenen physischen Verbindung und benachrichtigt alle anderen Knoten in dem nachgiebigen Mehrprotokoll-Label-Switching-Ringnetzwerk über die beobachtete Auslastung; und
- jeder Knoten in dem nachgiebigen Mehrprotokoll-Label-Switching-Ringnetzwerk justiert die Rate, mit der der Knoten Daten zu dem nachgiebigen Mehrprotokoll-Label-Switching-Ringnetzwerk sendet, gemäß dem Protokoll des Kapitalsteueralgorithmus und der erhaltenen Benachrichtigung; und
Einteilen der entsprechenden Client-Daten in der physischen Verbindung oder logischen Verbindung außerhalb des nachgiebigen Mehrprotokoll-Label-Switching-Ringnetzwerks in einem Dienstzielknoten.

4. Verfahren nach Anspruch 3, wobei der Schritt des Einteilens von Mehrprotokoll-Label-Switching-Client-Daten eines Dienstquellenknotens Folgendes umfasst:
Einteilen von Mehrprotokoll-Label-Switching-Client-Daten eines Dienstquellenknotens auf das nachgiebige Mehrprotokoll-Label-Switching-Ringnetzwerk gemäß einem strikten Prioritätseinteilungsalgorithmus in dem Knoten.

5. Verfahren nach Anspruch 4, wobei der Schritt des Einteilens von Mehrprotokoll-Label-Switching-Client-Daten eines Dienstquellenknotens auf das nachgiebige Mehrprotokoll-Label-Switching-Ringnetzwerk gemäß einem strikten Prioritätseinteilungsalgorithmus in dem Knoten Folgendes umfasst:
Durchführen einer Flussklassifikation an auf dem Ring einzuteilenden lokalen Client-Daten in dem Dienstquellenknoten;
Ausfüllen eines Experimentfelds eines Mehrprotokoll-Label-Switching-Rahmens gemäß einer Ebene der Flussklassifikation; und
Einteilen der lokalen Client-Daten durch verschiedene Ausgangsportwarteschlangen auf das nachgiebige Mehrprotokoll-Label-Switching-Ringnetzwerk gemäß verschiedenen durch das Experimentfeld angegebenen Prioritäten.

6. Verfahren nach Anspruch 5, wobei der Schritt des Ausfüllens eines Experimentfelds eines Mehrprotokoll-Label-Switching-Rahmens Folgendes umfasst:
Ausfüllen eines Experimentfelds eines Mehrprotokoll-Label-Switching-Rahmens gemäß einem Prioritätsfeld von Client-Daten eines virtuellen lokalen Netzwerks und/oder einem Feld des Diensttyps von Internet-Protokoll-Client-Daten und/oder einer durch einen Administrator designierten Priorität.

7. Verfahren nach Anspruch 3, wobei der Schritt des Multiplexens der Client-Daten verschiedener Knoten Folgendes umfasst:
Herstellen eines Label Switched Path, der für die Mehrprotokoll-Label-Switching-Client-Daten erforderlich ist;
Anpassen der Mehrprotokoll-Label-Switching-Client-Daten in die dem Label Switched Path entsprechende physische Verbindung durch eine generische Framing-Prozedur, ein Punkt-zu-Punkt-Protokoll oder eine Hochgeschwindigkeits-Datenverbindungssteuerung oder Anpassen der Mehrprotokoll-Label-Switching-Client-Daten direkt in die dem Label Switched Path entsprechende logische Verbindung.

8. Verfahren nach Anspruch 3, ferner mit dem folgenden Schritt:
Einkapseln von Nicht-Mehrprotokoll-Label-Switching-Client-Daten in Mehrprotokoll-Label-Switching-Client-Daten gemäß vorbestimmten Regeln in dem Dienstquellenknoten.

9. Verfahren nach Anspruch 3, wobei die vorbestimmten Regeln Folgendes umfassen:
Klassifizieren von Nicht-Mehrprotokoll-Label-Switching-Client-Datenpaketen in verschiedene Weiterleitungsäquivalenzklassen gemäß Zieladressen, Einfügen entsprechender Labels in Paketkopfteile gemäß den Weiterleitungsäquivalenzklassen der Pakete und **dadurch** Erzielen der Mehrprotokoll-Label-Switching-Einkapselung; oder
Klassifizieren von Nicht-Mehrprotokoll-Label-Switching-Client-Datenpaketen in verschiedene Weiterleitungsäquivalenzklassen gemäß Anforderungen bezüglich Dienstgüte, Einfügen entsprechender Labels in Paketkopfteile gemäß den Weiterleitungsäquivalenzklassen der Pakete und **dadurch** Erzielen der Mehrprotokoll-Label-Switching-Einkapselung.

10. Verfahren nach einem der Ansprüche 3 bis 9, ferner mit dem folgenden Schritt:
Implementieren von ringübergreifender Client-Datenübertragung durch einen ringübergreifenden Label Switched Path.

11. Verfahren nach einem der Ansprüche 3 bis 9, ferner mit dem folgenden Schritt:
Verwenden eines 1:1- und/oder 1+1-Schutzes des Label Switched Path für ringinteme und ringübergreifende Client-Daten.

12. Verfahren nach einem der Ansprüche 3 bis 9, ferner mit dem folgenden Schritt:
Verwenden eines Ring-Switching-Schutzes und/oder eines Quellenrouten-Schutzes für das nachgiebige Mehrprotokoll-Label-Switching-Ringnetzwerk.

13. Verfahren nach einem der Ansprüche 3 bis 9, ferner mit dem folgenden Schritt:
Herstellen eines dedizierten Label Switched Path zwischen zwei angrenzenden Knoten in dem nachgiebigen Mehrprotokoll-Label-Switching-Ringnetzwerk zum Transport von Informationen eines Protokolls der automatischen Topologieentdeckung.

## Revendications

1. Réseau d'anneaux à commutation d'étiquettes multi-protocoles résistant, comprenant une pluralité de noeuds de réseau pour envoyer ou recevoir des données client vers ou depuis le réseau d'anneaux à commutation d'étiquettes multi-protocoles résistant, et une liaison physique ou une liaison logique connectant les noeuds de réseau pour transmettre des données client entre les noeuds de réseau, dans lequel :
un format d'encapsulation des données client reçues ou envoyées par les noeuds de réseau du côté du réseau d'anneaux à commutation d'étiquettes multi-protocoles résistant est un format de trame standard de commutation d'étiquettes multi-protocoles ;
la liaison physique ou la liaison logique achemine les données client entre les noeuds de réseau par le biais d'un chemin de commutation d'étiquettes ;
les noeuds envoient des données au réseau d'anneaux à commutation d'étiquettes multi-protocoles résistant à des débits qui sont commandés par un algorithme de commande d'équité de largeur de bande ; des informations de protocole de l'algorithme de commande d'équité de largeur de bande sont transportées par le biais d'un chemin de commutation d'étiquettes dédié entre deux noeuds adjacents dans le réseau d'anneaux à commutation d'étiquettes multi-protocoles résistant ;
une couche de commande d'accès au support de chaque noeud dans le réseau d'anneaux à commutation d'étiquettes multi-protocoles résistant observe l'utilisation de la liaison physique connectée au noeud, et notifie tous les autres noeuds dans le réseau d'anneaux à commutation d'étiquettes multi-protocoles résistant de l'utilisation observée ; et
chaque noeud dans le réseau d'anneaux à commutation d'étiquettes multi-protocoles résistant règle le débit auquel le noeud envoie des données au réseau d'anneaux à commutation d'étiquettes multi-protocoles résistant en fonction du protocole de l'algorithme de commande d'équité et de la notification obtenue.

2. Réseau d'anneaux à commutation d'étiquettes multi-protocoles résistant selon la revendication 1, dans lequel les noeuds adaptent les données client, à envoyer, dans la liaison physique par une procédure d'encadrement de trames générique, un protocole point à point ou une commande de liaison de données à haut débit, ou acheminent directement les données client dans la liaison logique.

3. Procédé de mise en oeuvre d'un portage de service pour le réseau d'anneaux à commutation d'étiquettes multi-protocoles résistant selon la revendication 1, comprenant :
la programmation de données client à commutation d'étiquettes multi-protocoles d'un noeud de service source sur le réseau d'anneaux à commutation d'étiquettes multi-protocoles résistant en fonction d'un algorithme de programmation prédéterminé au niveau du noeud ;
le multiplexage, par le biais d'un chemin de commutation d'étiquettes, des données client des différents noeuds dans la même liaison physique ou liaison logique en vue de leur transport ;
l'établissement d'un chemin de commutation d'étiquettes dédié entre deux noeuds adjacents dans le réseau d'anneaux à commutation d'étiquettes multi-protocoles résistant pour transporter des informations de protocole d'un algorithme de commande d'équité de largeur de bande ;
la commande des débits auxquels les noeuds de réseau envoient des données au réseau d'anneaux à commutation d'étiquettes multi-protocoles résistant par le biais de l'algorithme de commande d'équité de largeur de bande en
- utilisant le chemin de commutation d'étiquettes dédié entre deux noeuds adjacents dans le réseau d'anneaux à commutation d'étiquettes multi-protocoles résistant pour transporter les informations de protocole de l'algorithme de commande d'équité ;
- une couche de commande d'accès au support de chaque noeud dans le réseau d'anneaux à commutation d'étiquettes multi-protocoles résistant observant l'utilisation de la liaison physique connectée au noeud, et notifiant tous les autres noeuds dans le réseau d'anneaux à commutation d'étiquettes multi-protocoles résistant de l'utilisation observée ; et
- chaque noeud dans le réseau d'anneaux à commutation d'étiquettes multi-protocoles résistant réglant le débit auquel le noeud envoie des données au réseau d'anneaux à commutation d'étiquettes multi-protocoles résistant en fonction du protocole de l'algorithme de commande d'équité et de la notification obtenue, et
la programmation des données client correspondantes dans la liaison physique ou la liaison logique du réseau d'anneaux à commutation d'étiquettes multi-protocoles résistant au niveau d'un noeud de service destinataire.

4. Procédé selon la revendication 3, dans lequel l'étape de programmation des données client à commutation d'étiquettes multi-protocoles d'un noeud de service source comprend :
la programmation des données client à commutation d'étiquettes multi-protocoles d'un noeud de service source sur le réseau d'anneaux à commutation d'étiquettes multi-protocoles résistant en fonction d'un algorithme de programmation à priorité stricte au niveau du noeud.

5. Procédé selon la revendication 4, dans lequel l'étape de programmation des données client à commutation d'étiquettes multi-protocoles d'un noeud de service source sur le réseau d'anneaux à commutation d'étiquettes multi-protocoles résistant en fonction d'un algorithme de programmation à priorité stricte au niveau du noeud comprend :
l'exécution, au niveau du noeud de service source, d'une classification de flux sur les données client locales à programmer sur l'anneau ;
le remplissage d'un champ expérimental d'une trame de commutation d'étiquettes multi-protocoles en fonction d'un niveau de classification de flux ; et
la programmation des données client locales, par le biais de files d'attente de différents ports de sortie, sur le réseau d'anneaux à commutation d'étiquettes multi-protocoles résistant en fonction des différentes priorités indiquées par le champ expérimental.

6. Procédé selon la revendication 5, dans lequel l'étape de remplissage d'un champ expérimental d'une trame de commutation d'étiquettes multi-protocoles comprend :
le remplissage d'un champ expérimental d'une trame de commutation d'étiquettes multi-protocoles en fonction d'au moins un parmi un champ de priorité de données client de réseau local virtuel, un champ de type de service de données client de protocole internet et une priorité désignée par un administrateur.

7. Procédé selon la revendication 3, dans lequel l'étape de multiplexage des données client de différents noeuds comprend :
l'établissement d'un chemin de commutation d'étiquettes nécessaire pour les données client à commutation d'étiquettes multi-protocoles ;
l'adaptation des données client à commutation d'étiquettes multi-protocoles dans la liaison physique correspondant au chemin de commutation d'étiquettes par une procédure d'encadrement de trames générique, un protocole point à point ou une commande de liaison de données à haut débit, ou l'adaptation des données client à commutation d'étiquettes multi-protocoles directement dans la liaison logique correspondant au chemin de commutation d'étiquettes.

8. Procédé selon la revendication 3, comprenant en outre :
l'encapsulation de données client à commutation d'étiquettes non multi-protocoles dans des données client à commutation d'étiquettes multi-protocoles en fonction de règles prédéterminées au niveau du noeud de service source.

9. Procédé selon la revendication 3, dans lequel les règles prédéterminées comprennent :
la classification de paquets de données client à commutation d'étiquettes non multi-protocoles dans des classes équivalentes de transfert différentes en fonction des adresses destinataires, l'insertion d'étiquettes correspondantes dans des en-têtes de paquets en fonction des classes équivalentes de transfert des paquets, et ainsi l'exécution de l'encapsulation de commutation d'étiquettes multi-protocoles ; ou
la classification de paquets de données client à commutation d'étiquettes non multi-protocoles dans des classes équivalentes de transfert différentes en fonction d'exigences de qualité de service, l'insertion d'étiquettes correspondantes dans des en-têtes de paquets en fonction des classes équivalentes de transfert des paquets, et ainsi l'exécution de l'encapsulation de commutation d'étiquettes multi-protocoles.

10. Procédé selon l'une quelconque des revendications 3 à 9, comprenant en outre : la mise en oeuvre d'une transmission de données client entre anneaux par un chemin de commutation d'étiquettes entre les anneaux.

11. Procédé selon l'une quelconque des revendications 3 à 9, comprenant en outre : l'emploi d'un chemin de commutation d'étiquettes 1:1 et/ou d'une protection 1+1 1 pour les données client dans l'anneau et entre anneaux.

12. Procédé selon l'une quelconque des revendications 3 à 9, comprenant en outre :
l'emploi d'une protection de commutation d'anneau et/ou d'une protection de route source pour le réseau d'anneaux à commutation d'étiquettes multi-protocoles résistant.

13. Procédé selon l'une quelconque des revendications 3 à 9, comprenant en outre :
l'établissement d'un chemin de commutation d'étiquettes dédié entre deux noeuds adjacents dans le réseau d'anneaux à commutation d'étiquettes multi-protocoles résistant pour le transport d'informations d'un protocole de découverte de topologie automatique.
